# EUROPÄISCHE PATENTSCHRIFT

(11) **EP 1 096 634 B1**
(45) Veröffentlichungstag und Bekanntmachung des Hinweises auf die Patenterteilung: **02.05.2007**
(21) Anmeldenummer: 00810574.4
(22) Anmeldetag: 29.06.2000
(51) Int. Cl.: H02M 1/12, H02J 3/01

(54) **Verwendung eines drei-Phasen-Filters mit Nullleiter**
Use of a three phase mains filter with neutral
Usage d'un filtre triphasé avec neutre

(30) Priorität: 29.10.1999 CH 198599
(43) Veröffentlichungstag der Anmeldung: 02.05.2001
(73) Patentinhaber: SCHAFFNER EMV AG, 4542 Luterbach (CH)
(72) Erfinder: Kull, Peter, 4513 Langendorf (CH)
(74) Vertreter: P&TS Patents & Technology Surveys SA

(56) Entgegenhaltungen:
- EP-A- 0 788 216
- EP-A- 1 069 673
- WO-A-96/24983
- FR-A- 2 620 580
- US-A- 4 369 416
- PATENT ABSTRACTS OF JAPAN vol. 018, no. 088 (E-1507), 14. Februar 1994 (1994-02-14) & JP 05 292669 A (FUJI ELELCTROCHEM CO LTD), 5. November 1993 (1993-11-05)

## Beschreibung

Die vorliegende Erfindung betrifft die Verwendung eines Filters, insbesondere am Eingang von Installationen, beispielsweise an Wohnungs- oder Haus-Eingängen.

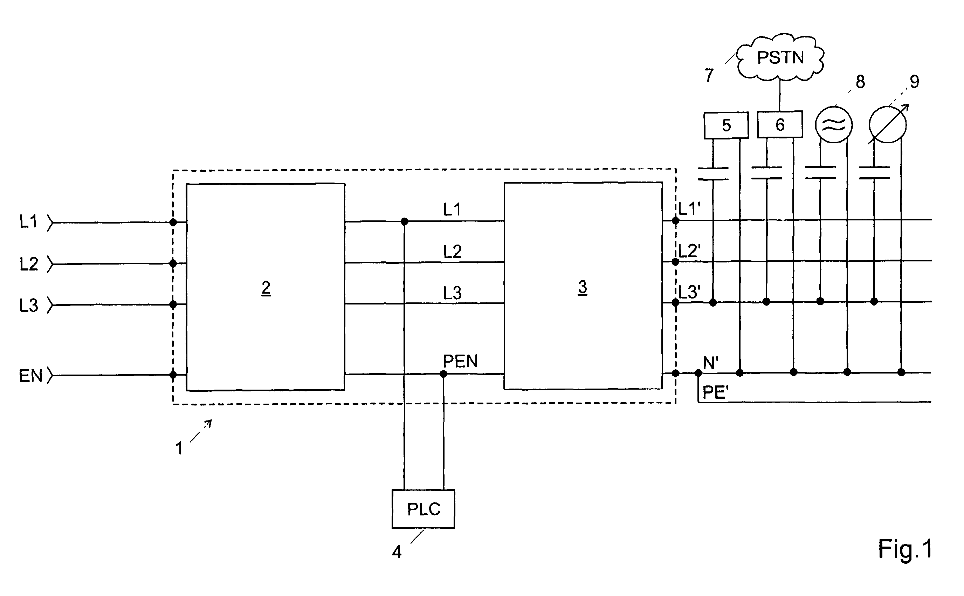

Das Stromnetz innerhalb einer Installation, beispielsweise innerhalb einer Wohnung oder eines Gebäudes, kann auch verwendet werden, um Daten zwischen Geräten in der Installationseinheit zu übertragen. Ein solches System ist auf der Figur 1 schematisch dargestellt. Eine Vielzahl von Sender-Empfängern 5,6,8,9, beispielsweise Sprechanlagen, Brand und Einbruchsmelder, Sensoren, Wiedergabegeräte, gesteuerte Geräte, intelligente Haushaltsgeräte, Computer 5, usw., können über ein in den Phasenleitern L1', L2', L3' injiziertes moduliertes Signal Daten austauschen. Hat ein Sender-Empfänger 6 Zugriff auf ein externes Telekommunikationsnetz 7, beispielsweise auf das öffentliche Telefonnetz, auf ein Mobilfunknetz, auf Internet oder auf ein externes Powerline Kommunikationsnetz usw., so können sich alle am Stromnetz angeschlossenen Sender-Empfänger in diesem Telekommunikationsnetz anmelden. Der Datenverkehr ist adressiert, so dass ein Sender eine Meldung, einen Befehl oder ein Applet an einen bestimmten Empfänger innerhalb der Installation senden kann. Das Trägersignal kann z.B. im Frequenzbereich 95 bis 148.5 kHz liegen (CENELEC Band B und C). Je nach Datenübertragungssystem und EMV (Elektromagnetische Verträglichkeit) Vorschriften können auch wesentlich höhere Frequenzen zur Anwendung kommen.

Damit die Signale, die von Sendern in einer Installation nicht von Empfängern in einer benachbarten Installation empfangen werden können, muss ein Filter 3 am Eingang der Installation vorgesehen werden, der die modulierten Signale dämpft. In der dargestellten Ausführungsvariante ist der Filter 3 nach dem Stromzähler 2 angeschlossen.

Es ist ein Ziel der vorliegenden Erfindung, einen solchen Filter zu verwenden. Dieser Filter muss eine hohe Dämpfung bei den für die Datenübertragung benutzten Frequenzen haben (z.B. CENELEC Band B und C). Die Dämpfung sollte bei den Trägerfrequenzen grösser als 20dB, vorzugsweise grösser als 40 dB sein. Die Dämpfung und die Verluste bei Netzfrequenz (16 2/3, 50, 60, oder 400 Hz) sollen dagegen minimal sein. Damit Transceiver innerhalb der selben Wohnung miteinander optimal kommunizieren können, muss die Impedanz in den für die Datenübertragung benutzten Frequenzen an der Ausgangsseite des Filters möglichst gross sein. Der Nennstrom des Filters muss vorzugsweise zwischen 10 und 125 A liegen.

In vielen Ländern darf der Nullleiter nicht über eine Drossel geführt werden, sondern er muss direkt mit dem Hauseingangs-Erdleiter PEN verbunden werden. Durch die Anwendung bedingt können die Ströme im Dreiphasennetz asymmetrisch sein, d.h. als Extremwert kann, bei einphasiger Last, der volle Nennstrom über den Nulleiter zurückfliessen.

Es sind schon Netzfilter bekannt, die dazu dienen, Installationen mit PLC-Geräten vor externen Geräuschen zu schützen, damit die Qualität der Kommunikation zwischen PLC-Geräten verbessert wird. Solche Netzfilter sind jedoch kaum geeignet, um innerhalb der Installation erzeugte modulierte PLC-Signale effizient zu dämpfen, so dass sie nicht in einer benachbarten Installation empfangen werden können.

Es ist ein Ziel der Erfindung, die Verwendung eines Filters anzubieten, die unter allen möglichen Lastfällen die erforderliche Dämpfung kostengünstig und mit minimalen Verlusten zur Verfügung stellt.

Gemäss der Erfindung werden diese Ziele anhand der im Hauptanspruch angegebenen Merkmale erreicht. Weitere bevorzugte Ausführungsformen gehen ausserdem aus den Nebenansprüchen hervor.

Die vorliegende Erfindung ist besser verständlich anhand der als Beispiel angegebenen Beschreibung, die durch die folgenden Figuren illustriert wird.
Die Figur 1 zeigt schematisch, wie der erfindungsgemässe Filter im Stromsystem einer Installation erfindungsgemäss angeschlossen werden kann.
Die Figur 2 zeigt eine bisherige Lösung für solche Filter.
Die Figur 3 zeigt als Beispiel eine bevorzugte Ausführungsvariante des erfindungsgemässen Filters.
Die Figur 4 zeigt in schematischer Weise eine erste Variante einer Drossel 32, die im erfindungsgemässen Filter eingesetzt wird.
Die Figur 5 zeigt eine andere Variante der Drossel 32, die im erfindungsgemässen Filter eingesetzt wird.
Die Figur 6A zeigt eine Seitenplatte des Gehäuses des erfindungsgemässen Filters, das speziell zur platzsparenden Montage unterhalb eines Stromzählers ausgebildet ist.
Die Figur 6B zeigt die obere Platte dieses Gehäuses.
Die Figur 7 zeigt eine Variante des Filters zur Anwendung bei unabhängigen Datenübertragungsnetzen auf beiden Filterseiten. Neben der Entkopplung wird beidseitig die Impedanz soweit erhöht, dass der Filter die Kommunikationssignale kaum bedämpft.

In einem PLC-System kann die Datenübertragung über jeden der drei Phasenleiter erfolgen. Der am Eingang der Installation vorhandene Filter 3 zur Dämpfung der modulierten Signale muss daher dreiphasig sein. Drei-Phasen-Filter werden entweder mit drei oder vier Leitern ausgeführt. Filter mit drei Leitern werden üblicherweise nur dann verwendet, wenn kein stromführender Nullleiter vorhanden ist. Ist ein Nullleiter da, müssen normalerweise Vier-Leiter-Filter verwendet werden, bei dem der Nullleiter identisch mit den Phasenleitern als vierte Wicklung über eine stromkompensierte Drossel geführt wird. Nur so kann bei unsymmetrischer Last eine Sättigung der stromkompensierten Drossel vermieden werden. Solche Vier-Leiter-Filter dürfen jedoch in vielen Ländern nicht als Filter am Eingang einer Gebäudeinstallation verwendet werden, da der Nullleiter nicht über eine Drossel geführt werden darf, zudem können sie Kommunikationssignale, die zwischen Phase und Nullleiter eingekoppelt sind, nicht bedämpfen.

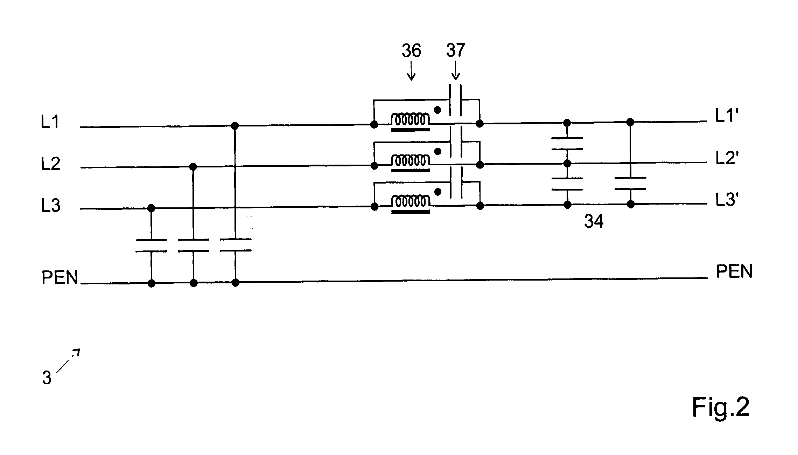

Die Figur 2 zeigt ein Beispiel eines herkömmlichen Drei-Leiter-Filters 3. Der Filter enthält drei einzelne Drosseln 36 und drei parallel geschalteten Kapazitäten 37. Die für die Gleichtakt (Common Mode) Dämpfung der Phasen L1/L2/L3 gegen N wirksame Induktivität reduziert sich dabei auf einen Drittel des Wertes der Einzeldrossel. Wenn eine bestimmte Dämpfung erreicht werden muss, müssen Drosseln mit dem dreifachen Wert verwendet werden. Diese sind aber gross und teuer, haben grosse magnetische Streufelder, die den Stromzähler 2 beeinflussen können, und ergeben im einzelnen Pfad eine unnötig hohe Impedanz für den Betriebsstrom. Solche herkömmliche Filter sind daher für eine Verwendung am Eingang einer Installation nicht geeignet.

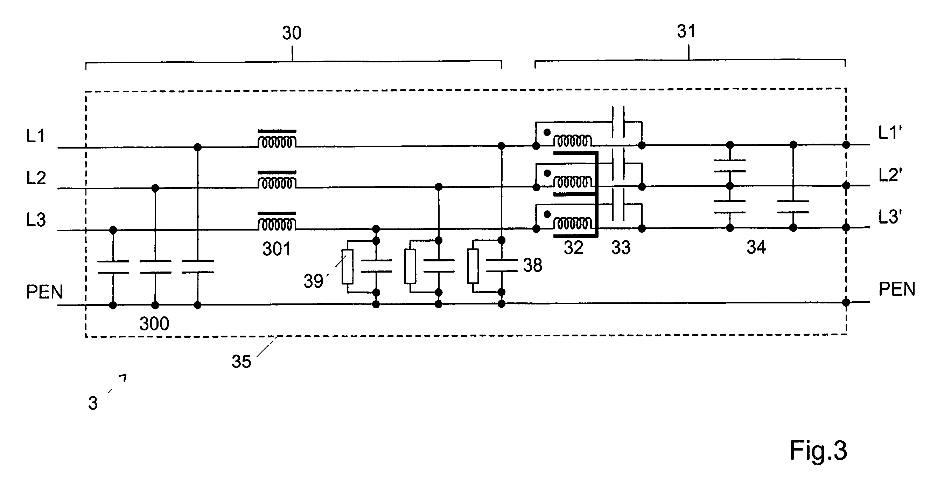

Die Figur 3 zeigt als Beispiel eine Ausführungsvariante des erfindungsgemässen Filters. Der Filter 3 umfasst eine erste, optionale Dämpfungsstufe 30 sowie eine zweite Dämpfungsstufe 31.

Die erste Dämpfungsstufe 30 umfasst im dargestellten Beispiel ein erstes Kapazitätsnetz mit drei in Stern geschalteten Kapazitäten 300, drei einzelnen Drosseln 301 sowie ein zweites Kapazitätsnetz mit drei in Stern geschalteten Kapazitäten 38 und drei parallel dazu geschalteten Widerstände 38 mit einem hohen Widerstand. Andere Anordnungen für diese erste Dämpfungsstufe 30 können aber auch im Rahmen dieser Erfindung eingesetzt werden.

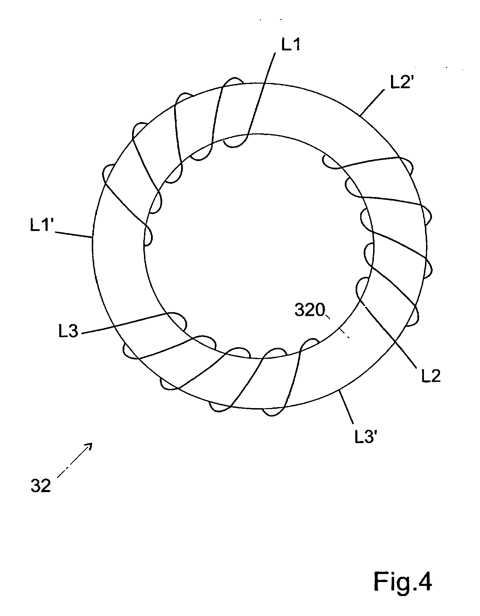

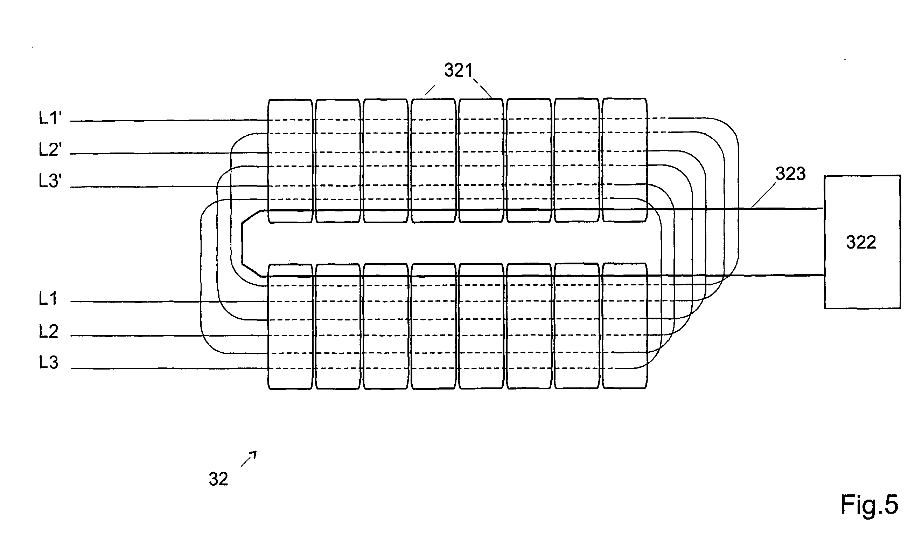

Die zweite Dämpfungsstufe 31 umfasst eine stromkompensierte Drei-Phasen-Drossel 32, die in mehr Details in zwei Varianten in Figur 4 und 5 dargestellt wird, sowie vorzugsweise drei in Dreieck geschalteten Kapazitäten 34. Zusätzliche Kapazitäten 33 werden vorzugsweise eingeschaltet, um die Dämpfungskurve fein abzustimmen.

Stromkompensierte Drossel sind so ausgebildet, dass die im Kern erzeugten magnetischen Flüsse sich gegenseitig aufheben, so dass die Induktivitäten im genutzten Frequenzbereich praktisch wirkungsvoll sind, wenn nur symmetrische Ströme gegenüber Erdpotential über den Leitern fliessen. Fliessen jedoch unsymmetrische Ströme ab, so ist die Summe der gesamten Ströme ungleich, und die magnetischen Flüsse heben sich nicht mehr auf. Ein besonderer Vorteil dieser stromkompensierten Drossel für die Erfindung ist, dass die erzeugten Streufelder gering bleiben, so dass der Stromzähler 2 in der unmittelbaren Nähe eingebaut werden kann, ohne durch diese Streufelder beeinträchtigt zu werden.

Die auf der Figur 4 dargestellte Variante der Drossel umfasst vorzugsweise einen Ringkern 320 mit verteiltem Luftspalt, beispielsweise einen Ringkern aus Eisenpulver. Die Sättigung liegt so hoch, dass die Funktion auch bei voller Belastung einer Phase L1, L2 oder L3 und auf dem Nullleiter PEN erhalten bleibt.

Die auf der Figur 5 dargestellte andere Variante der Drossel umfasst eine Reihe 321 von vorzugsweise Ringkernen mit verteiltem Luftspalt, beispielsweise aus Eisenpulver, durch die die drei Phasenleiter L1, L2, L3 ein- oder mehrere Male bifilar geführt werden. Die Sättigung liegt so hoch, dass die Funktion auch bei voller Belastung einer Phase LI, L2 oder L3 und auf dem Nullleiter PEN erhalten bleibt. Zudem entsteht eine sehr enge Kopplung zwischen den Phasenleitern, so dass auf die Kondensatoren 34 zur Signalkopplung zwischen den Phasen verzichtet werden kann. Eine zusätzliche, mit einem Kondensator 322 abgeschlossene Wicklung 323 ermöglicht es, die gewünschte Impedanz einzustellen.

Diese Drossel 32 hat somit auch bei einphasiger Belastung mit allen drei Wicklungen parallel fast die selbe Induktivität wie die bei einem Strang alleine, das heisst wie bei stromkompensiertem Betrieb. Diese Drossel ermöglicht daher einen Filter, welcher eine höhere Impedanz im Frequenzbereich des modulierten Trägers hat als für die Netzfrequenz.

Die Drossel 32 wird für einen vollen unsymmetrischen Betriebsstrom dimensioniert, wie er bei einem Haushalt vorkommen kann.

Diese Drossel 32 könnte auch für Filter für Systeme angewendet werden, bei denen der Nulleiter als PEN-Leiter geführt wird und deshalb nicht verdrosselt werden darf oder kann.

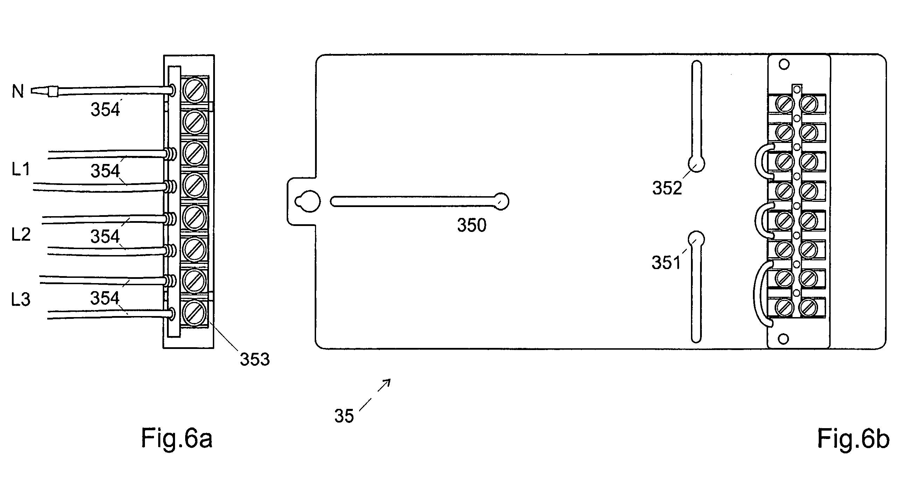

Der Filter 3 wird vorzugsweise in ein Gehäuse 35 integriert, das an eine Wand montiert werden kann und das über Löcher und Schienen 350, 351, 352 zur Befestigung eines standardisierten Stromzählers 2 verfügt, wie auf den Figuren 6A und 6B dargestellt. Der Stromzähler 2 und der Filter 3 können somit als zusammengeschraubte Einheit 1 am Platze des Stromzählers montiert werden. Auf diese Weise kann der erfindungsgemässe Filter 3 praktisch und platzsparend am Eingang jedes Haushalts zwischen Tableau und Stromzähler 2 angeordnet werden. Vorzugsweise sind die Stromleitungen L1, L2, L3 und PEN zwischen dem Stromzähler und dem Filter 3 über entsprechende getrennte Kabel 354 erreichbar, damit der Monteur "Mains Signalling-" und PLC- Geräte 4 (Power Line Communication), das heisst Geräte, die mit externen Vorrichtungen kommunizieren, an den Klemmen des Zählers 2 anschliessen kann.

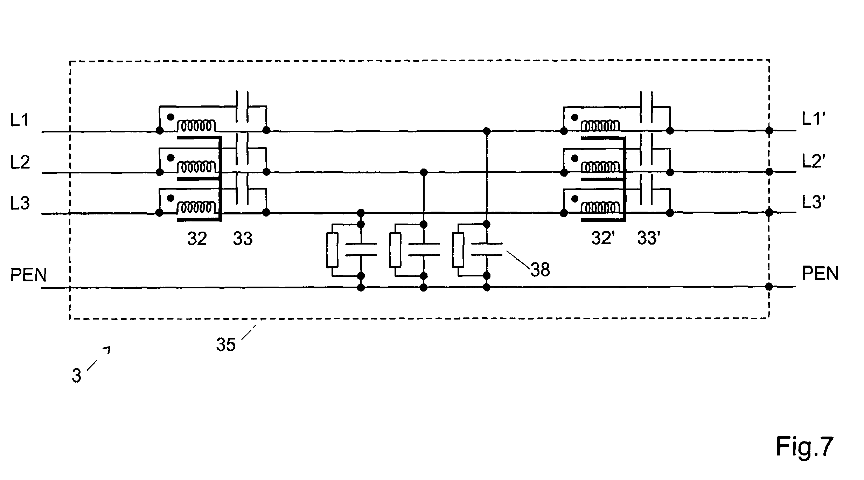

Werden sowohl innerhalb wie auch ausserhalb der Installation Datenübertragungseinrichtungen auf dem Netz betrieben, so können 2 Drosseln 32, 32' nach Figur 4 oder 5 in einer T Anordnung nach Figur 7 eingesetzt werden. Damit ist es möglich, bei unterschiedlicher Abstimmung der Drosseln für beide Kommunikationssysteme die erforderliche minimale Abschlussimpedanz einzuhalten und die nötige Signaldämpfung zu erreichen.

Bevorzugte Frequenzbereiche zur Datenübertragung sind dabei auf dem Netz der Stromversorgungsfirma ausserhalb des Gebäudes 3 bis 95 kHz und im Konsumentenbereich innerhalb des Gebäudes nach 95 bis 148.5 kHz.

Die hier angegebenen Frequenzbereichen sind nur bevorzugte Beispiele; die erfindungsgemässe Filteranordnung kann aber in einem sehr breiten Frequenzbereich angewendet werden.

### Stückliste

- 1: Zusammengeschraubte Einheit
- 2: Stromzähler
- 3: Filter
- 4: Gerät, das über PLC Daten mit externen Vorrichtungen austauschen kann
- 5: Computer
- 6: Kommunikationsgerät
- 7: Telekommunikationsnetz
- 8,9: Transceiver
- 30: Erste Dämpfungsstufe
- 31: Zweite Dämpfungsstufe
- 32: Stromkompensierte Drossel
- 33: Kapazität (Beispielsweise 3*22 nF)
- 34: Kapazität (Beispielsweise 3*68 nF)
- 35: Filtergehäuse
- 36: Einzeldrossel (Herkömmlicher Filter (3*96 µH)
- 37: Kapazität (Beispielsweise 3*20 nF)
- 38: Kapazität (Beispielsweise 3*2 µF)
- 320: Ringkern mit integriertem Luftspalt (beispielsweise Eisenpulver)
- 321: Paket von Ringkernen (beispielsweise Eisenpulver)
- 322: Kapazität (Beispielsweise 1 µF)
- 323: Drahtschlaufe aus ein oder mehreren Windungen
- 324: Phasenleiter ein oder mehrmals durch das Kernpaket geführt
- 350: Schienen zur Befestigung des Stromzählers auf dem Gehäuse
- 351: Loch zu einführen des Schraubenkopfes
- 352: Loch zu einführen des Schraubenkopfes
- 353: Anschlussklemmen für Leitung Eingang und Ausgang
- 354: Anschluss Kabel für Stromzähler

## Patentansprüche

1. Verwendung eines drei-Phasen-Filters (3) mit Nullleiter (PEN), dass eine stromkompensierte Drossel (32), in welcher die drei spannungsführenden Leiter (LI, L2, L3) gewickelt sind, sowie ein Kapazitätsnetz (33, 34, 38) umfasst, wobei der Nullleiter (PEN) nicht über eine Drossel geführt wird,
**dadurch gekennzeichnet, dass** der benannte drei-Phasen-Filter unmittelbar nach einem Stromzähler an einem Wohnungs-oder Hauseingang angeschlossen wird, um Datensignale zu dämpfen.

2. Verwendung eines drei-Phasen-Filter gemäss Anspruch 1, **dadurch** gekenntzeichnet, dass die benannte stromkompensierte Drossel (32) einen Ringkern (320) mit dicht verteilten Luftspalten umfasst.

3. Verwendung eines drei-Phasen-Filter gemäss einem der Ansprüche 1 bis 2, **dadurch gekennzeichnet, dass** die benannte stromkompensierte Drossel (32) mehrere parallele Ringkerne (320, 321) mit verteiltem oder festem Luftspalt umfasst.

4. Verwendung eines drei-Phasen-Filter gemäss einem der Ansprüche 1 oder 2, **dadurch gekennzeichnet, dass** die benannte Ringkerne (320 oder 321) aus Eisenpulver bestehen.

5. Verwendung eines drei-Phasen-Filter gemäss einem der vorhergehenden Ansprüche, **dadurch gekennzeichnet, dass** die drei Leiter LI, L2, L3 bifilar gewickelt werden, um die ausgangsseitige Kopplung zwischen den Phasen ohne zusätzliche Kapazitäten (34) zu gewährleisten.

6. Verwendung eines drei-Phasen-Filter gemäss einem der vorhergehenden Ansprüche, **dadurch gekennzeichnet, dass** die Impedanz und Bandbreite der Drossel (32) durch eine zusätzliche Wicklung (323) durch den Kern (321) mit paralleler Kapazität (322) abgestimmt und erhöht wird.

7. Verwendung eines drei-Phasen-Filter gemäss einem der vorhergehenden Ansprüche, **dadurch gekennzeichnet, dass** kleinere Kapazitäten (33) parallel zu jedem Strang der benannten Drossel (32) geschaltet sind.

8. Verwendung eines drei-Phasen-Filter gemäss einem der vorhergehenden Ansprüche, **dadurch gekennzeichnet, dass** der Filter eine zusätzliche erste Dämpfungsstufe (30) umfasst.

9. Verwendung eines drei-phasen-Filter gemäss einem der vorhergehenden Ansprüche, **dadurch gekennzeichnet, dass** der Filter, zur Impedanzerhöhung und Entkopplung, für netz- und lastseitige Datenkommunikation T-förmig mit je einer Drossel (32) auf der Netz- und Lastseite ausgeführt wird.

## Claims

1. Use of a three phase filter (3) with neutral (PEN) that includes a current-compensated choke coil (32) in which the three live leads (L1, L2, L3) are wound as well as a capacitor network (33, 34, 38), where the neutral (PEN) is not lead over a choke coil,
**characterized in that** said three phase filter is connected immediately after a current meter at the entry of a flat or house in order to dampen data signals.

2. Use of a three phase filter according to claim 1, **characterized in that** said current-compensated choke coil (32) includes a toroidal core (320) with densely distributed air gaps.

3. Use of a three phase filter according to one of the claims 1 to 2, **characterized in that** said current-compensated choke coil (32) includes several parallel toroidal cores (320, 321) with distributed or fixed air gap.

4. Use of a three phase filter according to one of the claims 1 or 2, **characterized in that** said toroidal cores (320 or 321) consist of iron powder.

5. Use of a three phase filter according to one of the preceding claims, **characterized in that** the three leads L1, L2, L3 are double-wound (bifilar) in order to ensure the coupling between the phases on the exit side without additional capacitors (34).

6. Use of a three phase filter according to one of the preceding claims, **characterized in that** the impedance and bandwidth of the coil choke (32) is adjusted and increased with an additional winding (323) through the core (321) with parallel capacitor (322).

7. Use of a three phase filter according to one of the preceding claims, **characterized in that** smaller capacitors (33) are connected in parallel to each strand of said coil choke (32).

8. Use of a three phase filter according to one of the preceding claims, **characterized in that** the filter includes an additional first dampening step (30).

9. Use of a three phase filter according to one of the preceding claims, **characterized in that** the filter, to increase impedance and for decoupling, for data communication through the line and load sides, is executed in a T-shape with one coil choke (32) each on the line side and on the load side.

## Revendications

1. Usage d'un filtre triphasé (3) avec neutre (PEN) incluant une bobine à courant compensé (32) dans laquelle sont enroulées les trois inductances (L1, L2, L3) ainsi qu'un réseau capacitif (33,34,38), le neutre (PEN) n'étant pas conduit via une bobine,
**caractérisé en ce que** ledit filtre triphasé est connecté immédiatement après un compteur électrique dans un appartement ou une entrée de maison pour atténuer des signaux de données.

2. Usage d'un filtre triphasé selon la revendication 1, **caractérisé en ce que** ladite bobine à courant compensé (32) comprend un noyau annulaire (320) avec des fentes à air densément distribuées.

3. Usage d'un filtre triphasé selon l'une des revendications 1 à 2, **caractérisé en ce que** ladite bobine à courant compensé (32) comprend une pluralité de noyaux annulaires parallèles (320,321) avec une fente à air fixe ou distribuée.

4. Usage d'un filtre triphasé selon l'une des revendications 1 à 2, **caractérisé en ce que** lesdits noyaux annulaires (320,321) sont constitués de poudre de fer.

5. Usage d'un filtre triphasé selon l'une des revendications précédentes, **caractérisé en ce que** les trois inductances L1,L2,L3 sont enroulées de manière bifilaire pour garantir le couplage des phases en sortie sans capacités (34) additionnelles.

6. Usage d'un filtre triphasé selon l'une des revendications précédentes, **caractérisé en ce que** l'impédance et la bande passante de la bobine d'induction est ajustée et augmentée par un enroulement (323) supplémentaire à l'intérieur du noyau (321) d'une capacité parallèle (322).

7. Usage d'un filtre triphasé selon l'une des revendications précédentes, **caractérisé en ce que** de plus petites capacités (33) sont connectées en parallèle de chaque brin de ladite bobine.

8. Usage d'un filtre triphasé selon l'une des revendications précédentes, **caractérisé en ce que** le filtre comprend de plus une première étape d'atténuation (30).

9. Usage d'un filtre triphasé selon l'une des revendications précédentes, **caractérisé en ce que** le filtre soit disposé en forme de T avec une bobine (32) à la fois du côté du réseau et du côté de la charge, pour augmenter l'impédance et le déphasage pour les communications de données côté réseau et côté charge.
